# EUROPEAN PATENT SPECIFICATION

(11) **EP 4 355 455 B1**
(45) Date of publication and mention of the grant of the patent: **23.09.2026**
(21) Application number: 22732065.2
(22) Date of filing: 31.05.2022
(51) Int. Cl.: B01D 29/11, B01D 29/74, B01D 29/94, B01D 29/15, D06F 39/10

(54) **SELF-CLEANING FILTERING DEVICE**
SELBSTREINIGENDE FILTERVORRICHTUNG
DISPOSITIF DE FILTRATION AUTONETTOYANT

(30) Priority: 15.06.2021 DE 102021115416
(43) Date of publication of application: 24.04.2024
(73) Proprietor: Planet Care d.o.o., 1000 Ljubljana (SI)
(72) Inventor: VRHOVEC, Miha, 1354 Horjul (SI)
(74) Representative: Grünecker Patent- und Rechtsanwälte PartG mbB
(86) International application number: PCT/EP2022/064680
(87) International publication number: WO 2022/263162

(56) References cited:
- EP-A1- 1 055 443
- DE-C1- 4 337 187
- US-A- 3 750 885
- US-A- 4 302 330

## Description

The present invention concerns a filtering device for filtering particles, in particular plastic particles, such as plastic fibers, from liquid according to the independent device claim as well as a related method.

There is an increasing need for making the use of liquid filtering devices that filter harmful particles, in particular plastic particles, such as plastic fibers, from particle-contaminated liquids, such as textile washing wastewater, more attractive for users in order to reduce the negative impact of such harmful particles on the environment.

WO 2019/122862 A1 discloses a centrifugal filter unit in which an impeller is rotated to actively draw contaminated liquid axially into the filter unit for filtering the liquid and to expel the filtered liquid in a radial direction.

Further prior art can be found in US 3,750,885 A, in which a strainer device is constructed so as to have rotatability of a cylinder-form screen filter by motor means such that flow blocking particles can be more readily washed off and removed from the outside of the screen by "shear" action and by a back-washing flow.

The removal of captured particle-sludge from such prior art systems, however, is rather cumbersome, often inconvenient, complex and unhygienic, which in particular with regard to a use with domestic appliances leaves room for improvement regarding the ease of use for the end user.

The present invention has the objective to provide a filtering device as well as a related method that reduces the maintenance efforts normally associated with the use of such particle filtering devices and making the use of such devices more attractive for customers and end users.

To achieve this objective, the present invention suggests a filtering device having the features of claim 1.

The present invention relates to a filtering device configured to be operated in a filtering mode in which particles, in particular plastic particles, such as plastic fibers, are filtered from a liquid flowing through the filtering device, the filtering device comprising an inlet chamber receiving unfiltered liquid in the filtering mode, an outlet chamber receiving filtered liquid from the inlet chamber in the filtering mode, and a filter screen unit separating the inlet chamber from the outlet chamber and being configured to filter particles from liquid flowing from the inlet chamber into the outlet chamber, wherein the filter screen unit is rotatable about an axis of rotation.

The filtering device is characterized in that at least a part of the inlet chamber is located radially outward of the rotatable filter screen unit with respect to the axis of rotation, and the filtering device is configured to be operated in a self-cleaning mode in which the filter screen unit is rotated to detach filtered particle-sludge from the filter screen unit.

By locating at least a part of the inlet chamber radially outward of the filter screen unit, the particle-sludge accumulates on the radial outward side, that is, on the inlet chamber side of the rotatable filter screen unit.

This inventive arrangement enables a reliable, centrifugal force-based self-cleaning mode by rotating the filter screen unit until particle-sludge detaches from the outer side of the filter screen unit and is gathered in the inlet chamber, from where it can be transported out of the filtering device, for example through a separate sludge outlet or through an inlet. This enables the removal of the particle-sludge from the filter screen unit with little effort and, for example, in an automated manner and without the need for manually opening the filtering device and removing the particle-sludge.

The filtering device according to the invention comprises a second impeller means configured to remove a suspension comprising particle-sludge from the inlet chamber in the self-cleaning mode.

Such a second impeller means allows the effective removal of the particle-sludge from the inlet chamber and, for example, out of the self-cleaning device in a time-efficient and convenient manner.

Furthermore, the second impeller means is at least partly located in the inlet chamber.

This enables the removal of the particle-sludge from the inlet chamber in an effective manner.

According to a possible embodiment of the invention, the filtering device is configured to hold the filter screen unit stationary in the filtering mode.

Thus, the filtering device is performing in the filtering mode like a conventional filtering device that only has non-moving parts, and no movement of parts interferes with the flow of liquid through the filtering device or creates undesired noise. Further, a filter cake made of filtered particles/particle-sludge can build on the outer side of the filter screen unit in the filtering mode, which increases the filtering effectiveness.

In a further possible embodiment, the filtering device comprises a first impeller means configured to move liquid from the outlet chamber through the filter screen unit to the inlet chamber, in the self-cleaning mode.

Such an active movement of liquid from the outlet chamber side through the filter screen unit to the inlet chamber side further supports and speeds up the self-cleaning process.

In a possible further advantageous embodiment, a rotation of the first impeller means is coupled to a rotation of the filter screen unit.

This allows a synchronous rotation of the two parts, a design with fewer parts and ensures that both self-cleaning procedures are carried out at the same time.

In a further possible embodiment, the first impeller means is located within the filter screen unit.

This arrangement of the first impeller means within the filter screen unit allows, in an effective and space-saving way, to move liquid from the outlet chamber through the filter screen unit in the self-cleaning mode, and also enables it to actively transport particle-sludge out of the inlet chamber, for example, via a sludge outlet.

In another embodiment, it is possible that a rotation of the second impeller means is coupled to a rotation of the filter screen unit, and/or that a rotation of the second impeller means is coupled to a rotation of the first impeller means.

Such couplings allow the rotation of the coupled parts at the same time in an efficient manner.

In a further beneficial possible embodiment, the filter screen unit and the first impeller means are driven by a common drive shaft extending along the axis of rotation.

This enables an efficient driving of the filter screen unit and the first impeller means, while realizing a compact design for the filtering device.

In a further advantageous, possible embodiment, the second impeller means is driven by the drive shaft.

This enables an efficient driving of all moving parts during in the self-cleaning mode, while maintaining a compact filter device design.

It is further possible that in another embodiment, the axis of rotation runs through a part of the outlet passageway of the outlet chamber and/or the drive shaft runs through a part of the outlet passageway of the outlet chamber.

Such arrangements move the position of the required sealing between a central driving means, such as the drive shaft, and the filter device housing to a more protected area of the filtering device, where there is comparably little liquid motion/pressure applied to the seal during the rotation in the self-cleaning mode.

In another possible embodiment, the filter screen unit comprises a hollow cage-like structure, the outlet chamber is located within the filter screen unit, and the filter screen unit is surrounded by the inlet chamber.

This nested arrangement allows for a very compact and space-saving design of the filtering device.

In a further advantageous, possible embodiment, the inlet chamber comprises a separate sludge outlet allowing particle-sludge to exit the filtering device in the self-cleaning mode.

This enables a convenient and clean disposal of the particle-sludge to downstream particle-sludge disposal means without interfering with the inlet and outlet of the chambers.

In a preferred, possible embodiment, there is a direct liquid flow path between the second impeller means and the sludge outlet.

This arrangement ensures an efficient transport of particle-sludge out of the filtering device.

In another possible embodiment, the second impeller means seals off a sludge outlet from the inlet chamber in the filtering mode.

This is an efficient way to control the flow of liquid through the sludge outlet and, for example, to prevent that liquid exiting the inlet chamber through the sludge outlet in the filtering mode.

In yet another possible embodiment, the filtering device comprises a detachable particle-sludge collecting means for capturing and dewatering particle-sludge detached from the filter screen unit in the self-cleaning mode.

This allows the gathering and concentration of the filtered particle-sludge in the filtering device itself and to conveniently clean or replace the particle-sludge collecting means by detaching and re-attaching it to the filtering device.

In a further possible embodiment, the particle-sludge collecting means is provided in the form of a second filter screen unit that is rotatable around the axis of rotation.

This allows the dewatering of the captured particle-sludge by centrifugal forces when rotating the second filter screen unit.

An optional rotating of the second filter screen unit by the common drive axis allows for a compact design and ensures that the second filter screen unit is rotated at the same time as, for example, the filter screen unit, the first impeller means and/or the second impeller means.

According to another possible embodiment, the particle-sludge collecting means is positioned in the flow path from the filter screen unit to the sludge outlet.

This ensures that particles are captured before liquid exits the sludge outlet in the self-cleaning mode.

In another possible embodiment of the invention, the inlet of the inlet chamber and the outlet of the outlet chamber are both located on the same axial face side of the filtering device.

Locating the inlet and outlet on the same axial face side focuses the required piping to a single side of the filtering device.

Optionally, when there is a separate sludge outlet, the inlet and outlet are located at an opposing end of the filtering device with respect to the sludge outlet, which allows for advantageous concentration of the accumulation of particle-sludge at the sludge outlet location by installing the filtering device in a certain orientation e.g. in a vertical orientation of the axis of rotation with the inlet and outlet oriented to the top side and the sludge outlet oriented to the bottom side.

A further possible embodiment of the invention relates to a filtering system comprising a filtering device according to one of the preceding embodiments, a detecting and control unit for detecting directly or indirectly a level of clogging of the filter screen unit, and a motor unit drivingly coupled with the filter screen unit and connected to the detecting and control unit, wherein the detecting and control unit is configured to execute the self-cleaning mode dependent on a detected level of clogging .

This system ensures a long-lasting operation readiness of the filtering device without the need for manual maintenance of the filtering device.

Another possible embodiment of the invention relates to a machine producing a flow of particle-contaminated liquid, in particular a textile washing machine, comprising a filtering device according to one of the preceding embodiments or a filtering system according to the previously described embodiment, in particular comprising said filtering device or said filtering system installed within the machine body casing.

Providing a contaminated-liquid producing machine, in particular a textile washing machine, with a filtering device or a filtering system according to the previous embodiments, enables a reliable filtering of the contaminated liquids at the source. The filtering device or filtering system optionally being installed within the machine body casing allows for non-interference with the optical appearance of the machine while still providing the full filtering and benefits of the present invention to the customer or end user.

In a possible embodiment, the machine comprises a particle-sludge collecting means for capturing and dewatering detached particle-sludge, in particular accessible from outside of the machine, more particularly implemented in an accessible opening of the machine, such as in a drawer of the machine, wherein the filtering device is connected to the particle-sludge collecting means such that filtered particle-sludge can be transported into the particle-sludge collecting means.

Providing such a particle-sludge collecting means allows for capturing and dewatering particle-sludge in the self-cleaning mode. Optionally, the particle-sludge may be collected at a defined location of the machine that is easily accessible from the outside of the machine for the user. Optionally implementing the particle-sludge collecting means in a readily accessible opening of the machine, such as a drawer of the machine, allows for an easy access to the collecting means that can be hidden from view when not required. Further, in case of a textile washing machine, the collecting means can be implemented into a drawer that is required in any case for the detergents.

The initially stated objective can further be achieved by a method of operating a filtering device filtering particles, in particular filtering plastic particles, such as plastic fibers, from a flow of liquid, the method comprising the steps of directing, in a filtering mode, a flow of liquid from the exterior of a rotatable filter screen unit through the rotatable filter screen unit and to the interior of the filter screen unit and thereby accumulating filtered particle-sludge on the radial outer side of the filter screen unit, the rotatable filter screen unit separating an inlet chamber from an outlet chamber of the filtering device and the method further comprising the steps of rotating the filter screen unit to detach filtered particle-sludge from the filter screen unit in a self-cleaning mode and removing a suspension comprising particle-sludge from the inlet chamber by a second impeller means at least partly located in the inlet chamber.

This method extends the service life of the filtering device and strongly reduces maintenance efforts.

In a possible and advantageous embodiment, the method comprises executing the self-cleaning mode dependent on a level of clogging of the filter screen unit.

Thus, the self-cleaning mode of the filter screen unit is carried out when required.

In another possible embodiment, the method comprises actively transporting liquid from the interior of the filter screen unit through the filter screen unit to the exterior of the filter screen unit, in the self-cleaning mode.

This further supports and speeds up the self-cleaning process.

In yet another possible embodiment, the method further comprises actively transporting in the self-cleaning mode a suspension comprising detached particle-sludge to a particle-sludge collecting means for capturing and dewatering the particle- sludge, in particular to a particle sludge collecting means detachable from the filtering device or to a particle-sludge collecting means external to the filtering device, such as to a compartment of a textile washing machine.

Actively transporting a suspension comprising detached particle-sludge to a particle-sludge collecting means for capturing and dewatering the particle sludge in the self-cleaning mode, for example by an impeller means, allows removal of the concentrated particle-sludge from the filtering device in a time-efficient and convenient manner, in particular of the particle-sludge is captured in an aforementioned detachable collecting means or external collecting means.

In advantageous possible embodiments, the aforementioned methods are carried out with a filtering device according to one of the previously mentioned embodiments, or are carried out with a filtering system as previously mentioned, or are carried out with a machine according to one of the previously mentioned embodiments.

In possible further embodiments, the aforementioned self-cleaning mode can be carried out for a time period in the range from 5 seconds to 10 seconds and with a speed in the range from 500 rpm to 3500 rpm.

In possible further embodiments, it is actively controlled, for the herein disclosed embodiments, whether the inlet, the outlet, and the sludge outlet are opened or closed, dependent on whether the filtering device is operated in the filtering mode or the self-cleaning mode.

In further embodiments of the aforementioned embodiments, the filter screen unit can be manufactured from metal and/or plastic, and/or can have a perforation with aperture sizes in the range from 20 µm to 200 µm.

In possible further embodiments of the aforementioned embodiments, the filtering device is operating while being under internal liquid pressure in the filtering mode and/or in the self-cleaning mode.

In order to improve the understanding of the invention, possible embodiments of the invention constituting combinations of various aforementioned embodiments will now be described with reference to the following figures:
Fig. 1 shows a perspective view of a schematically illustrated filtering device according to an embodiment of the invention as well as a schematically illustrated motor unit drivingly coupled thereto,
Fig. 2 shows the arrangement of Fig. 1 in an exploded view,
Fig. 3 shows a cross-sectional view through Fig. 1 taken along the axis of rotation, with the filtering device in the filtering mode (the blades of a first impeller means are not illustrated here for the purpose of better illustration),
Fig. 4 shows a cross-sectional view according to Fig. 3 with the filtering device in the self-cleaning mode (the blades of the first impeller means are not illustrated here for the purpose of better illustration),
Fig. 5 shows a cross-sectional view through the filtering device in the self-cleaning mode taken along the line B-B in Fig. 4 (the sludge outlet is not illustrated in this view for reasons of simplicity),
Fig. 6 shows a horizontal cross-sectional view through the filtering device in the self-cleaning mode, taken along line C-C in Fig. 4, at the second impeller means,
Fig. 7 shows a cross-sectional view through another embodiment of a filtering device having a second impeller means comprising flexible vanes, cut at a similar location as Fig. 6,
Fig. 8 shows a schematically illustrated filtering device according to an embodiment of the present invention implemented in a schematically illustrated textile washing machine,
Fig. 9 shows a cross-sectional view taken along axis A of another schematically illustrated embodiment of a filtering device according to the invention.

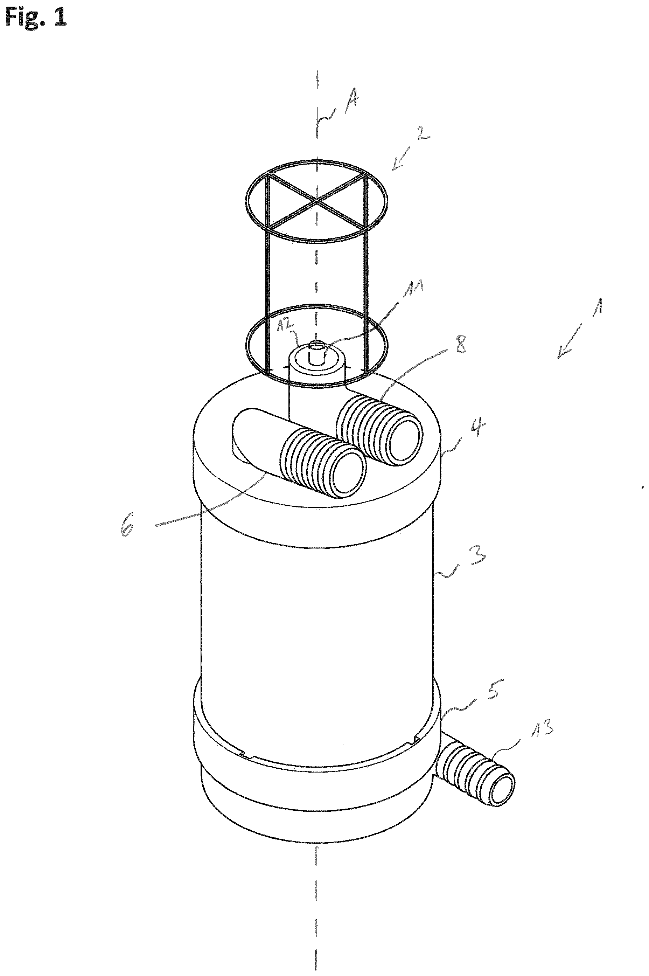

Fig. 1 shows a filtering device 1 according to the present invention and a schematically illustrated motor unit 2 drivingly coupled to the filtering device 1.

The filtering device 1 extends along an axis of rotation A with a cylindrically shaped main body casing 3 and basically flat and also cylindrically shaped end caps 4, 5, liquid-tight and removably attached to the opposite ends of the main body casing 3.

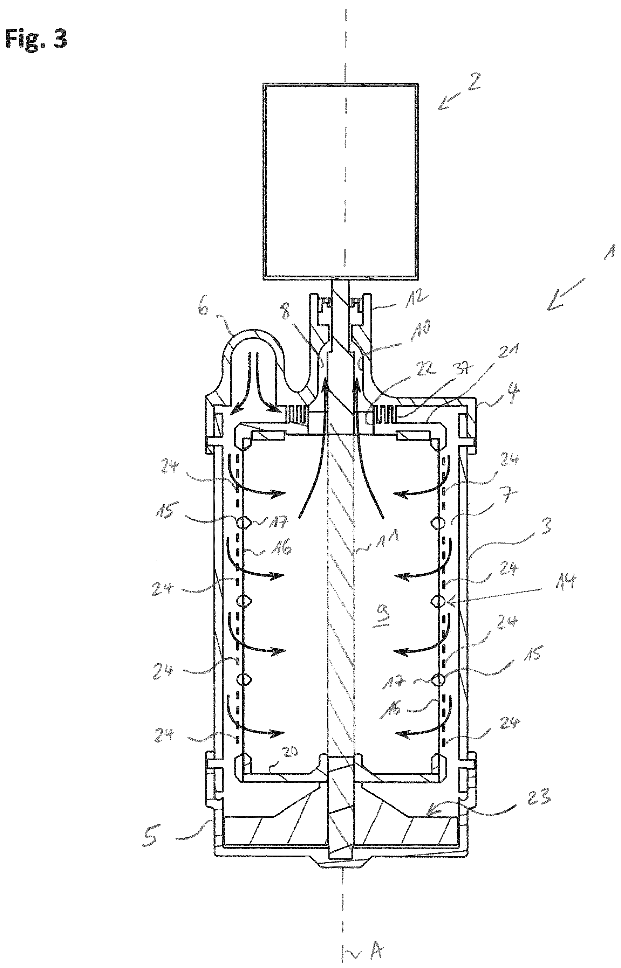

The end cap 4 at the motor-side end of the filtering device 1 comprises an inlet 6 in fluid communication with an inlet chamber 7 within the filtering device 1 (see e.g. Fig. 3) and comprises an outlet 8 in fluid communication with an outlet chamber 9 within the filtering device 1 (see e.g. Fig. 3).

The outlet 8 has a nozzle-like shape that can be connected to a hose e.g. leading to a sewer system or the like. The inlet 6 has a nozzle-like shape and can be connected to a hose which in turn is connected with the waste water outlet or pump of a machine producing a particle contaminated liquid, such as a textile washing machine that normally discontinuously pumps out fiber contaminated waste water during operation.

The outlet 8 protrudes from the motor-side end cap 4 such that the axis of rotation A runs through a part of the passageway 10 of the outlet 8 (see Fig. 3).

A drive shaft 11 extends along the axis A through the filtering device 1. The drive shaft 11 extends through the passageway 10 of the outlet 8 and through the outer wall 12 of the outlet 8 in a sealed manner, such that it reaches into the motor unit 2, as can be seen e.g. in Fig. 3.

At the opposite, non-motor side end cap 5, there is a sludge outlet 13 located on a tangential outer side of the end cap 5. The sludge outlet 13 also has a nozzle-like shape and can be connected to a hose, which in turn can be in fluid communication with a particle-sludge collecting means, for example located in a drawer of a textile washing machine.

Both outlets 8, 13 as well as the inlet 6 point into the same direction and are oriented approximately perpendicular to the axis of rotation A.

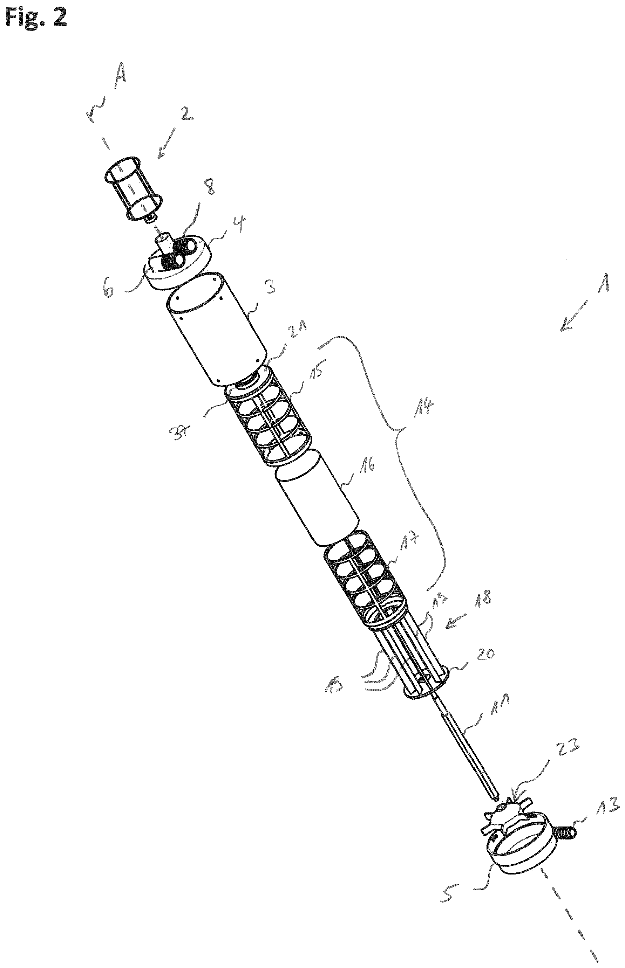

In the exploded view of Fig. 2, one can see the inner structure and functioning of the filtering device 1.

As can be seen from Fig. 2, the filtering device 1 further comprises a rotatable filter screen unit 14 that in this embodiment comprises a radially outer, lattice-like support frame 15 having a hollow cylindrical shape, a liquid permeable filter screen sheet 16 having a hollow cylindrical shape, and a radially inner lattice-like support frame 17. The filter screen sheet 16 is clamped between the two support frames 15, 17. In further possible embodiments, the filter screen sheet 16 is self-supporting and does not require the two support frames 15, 17. In another possible embodiment the filter screen sheet 16 is only supported by an inner support frame.

The filter screen unit 14 separates the radially outer inlet chamber 7 from the radially inward outlet chamber 9 and forms the barrier between the two chambers. Here in this embodiment, the outlet chamber 9 is located within the hollow filter screen unit 14 and the filter screen unit 14 in turn is surrounded by the inlet chamber 7.

Within the filter screen unit 14 there is located a first impeller means 18 that in this embodiment contains several liquid-moving impeller-blades 19 that longitudinally extend from a circular shaped end plate 20 along the axis of rotation and are arranged along a circular path around the axis of rotation A. The end plate 20 of the first impeller mean 18 is located at the non-motor end side of the filter screen unit 14. In this embodiment, the first impeller means 18 is rotationally coupled with the filter screen unit 14 via the end plate 20 being in a form fit with the inner support frame 17.

At the motor-end side of the filter screen unit 14, there is another end plate 21 closing the filter screen unit 14 at this end and having an axial passageway 22 that establishes via a ring-shaped outlet seal 37, e.g. a labyrinth seal, a fluid connection with the outlet passageway 10, as can best be seen in Fig. 3.

The drive shaft 11 extends from the motor unit 2 along the axis of rotation A and through the filter screen unit 14 and the first impeller means 18 and ends at a second impeller means 23 to which it is drivingly coupled as well being drivingly coupled to the first impeller means 18.

The second impeller means 23 is located at the location of the non-motor end cap 5 of the filtering device 1 in the proximity of the sludge outlet 13. In this embodiment, the second impeller means has rigid vanes 40, preferably made of a polymeric material. In this embodiment of the filtering device, the sludge outlet 13 is positioned tangentially to the direction of rotation of the second impeller means 23. Further, in this embodiment a direct liquid flow path is established between the second impeller means 23 and the sludge outlet 13.

The cross-sectional view of Fig. 3 shows the filtering device 1 in the filtering mode. The arrows indicate the flow direction of the liquid. The blades 19 of the first impeller means 18 are not illustrated in this figure for reasons of simplicity. The motor unit 2 holds the drive shaft 11 stationary, that is, during the filtering mode no parts of the filtering device 1 are moving.

In the depicted filtering mode of Fig. 3, particle-contaminated liquid, for example textile washing water contaminated with plastic fibers coming from a textile washing machine 25, enters the inlet chamber 7 via the inlet 6 and flows through the cylindrical walls of the filter screen unit 14, more specifically though the cylindrical filter screen sheet 16, and into the outlet chamber 9 and on through the outlet passageway 10 and exiting the outlet 8 and e.g. on into the drain. In the filtering mode, particle-sludge 24 filtered from the liquid accumulates on the radial outer side of the filter screen unit 14, more specifically here on the radial outer side of the filter screen sheet 16.

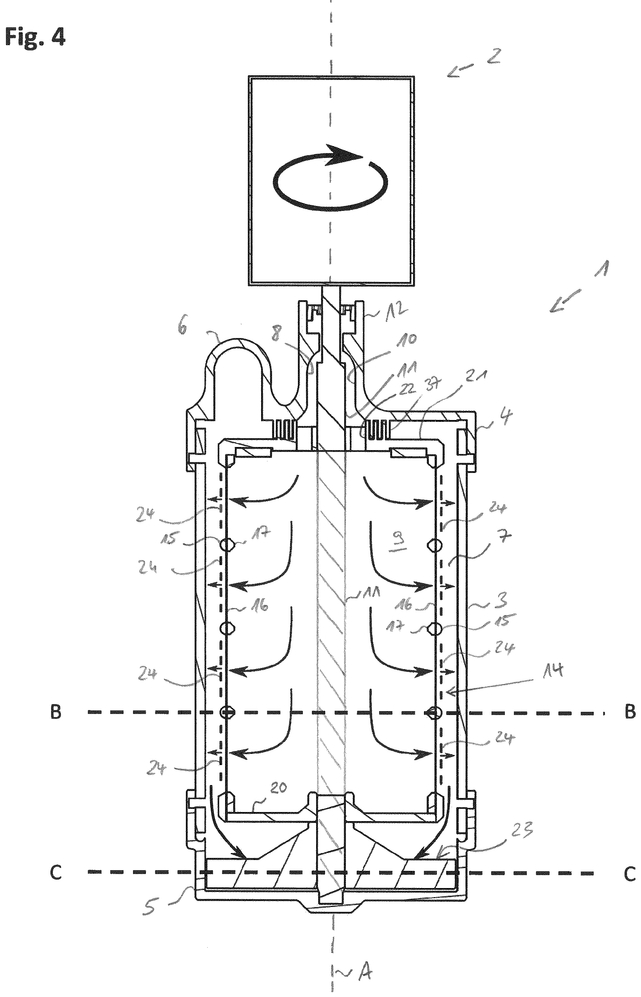

The cross-sectional view of Fig. 4 shows the filtering device 1 in the self-cleaning mode in which, in this embodiment, the motor unit 2 simultaneously rotates the filter screen unit 14, the first impeller means 18, and the second impeller means 23 by the drive shaft 11 in the same direction of rotation. The arrows in the filtering device indicate the flow direction of the liquid. The blades 19 are not illustrated in this figure for reasons of simplicity.

As can be seen, due to the centrifugal force initiated by the rotation of the filter screen unit 14 and enhanced by the radial flow of liquid from the outlet chamber 9 through the walls of the filter screen unit 14 propelled by the first impeller means 18 into the inlet chamber 7, the particle-sludge 24 detaches from the radial outer side of the filter screen sheet 16 into the inlet chamber 7, and is transported through the sludge outlet 13 by the second impeller means 23.

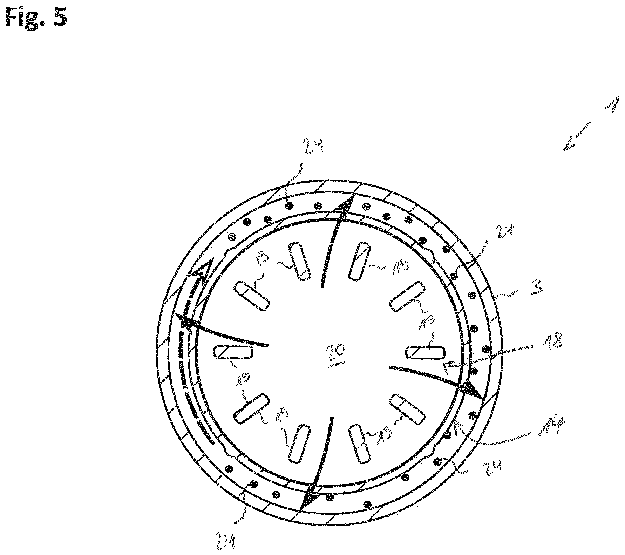

The cross-sectional view of Fig. 5 shows the filtering device 1 in the state of Fig. 4 cut along line B-B. The sludge outlet 13 is not illustrated in this view for reasons of simplicity. The solid line arrows in the filtering device 1 indicate the flow direction of the liquid. The broken line arrow shows the direction of rotation of the filter screen unit 14 and the first impeller means 18 (comprising the blades 19). The filter screen unit 14 is depicted in this figure as a single part for reasons of simplicity.

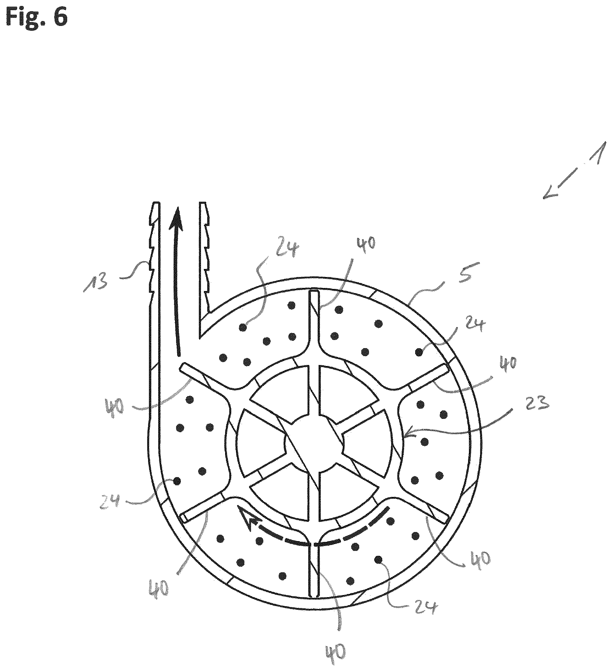

The cross-sectional view of Fig. 6 shows the filtering device 1 in the state of Fig. 4 cut along line C-C. As can be seen, the rotating second impeller means 23 actively transports the water suspension comprising particle-sludge 24, here the plastic fibers, out of the sludge outlet 13.

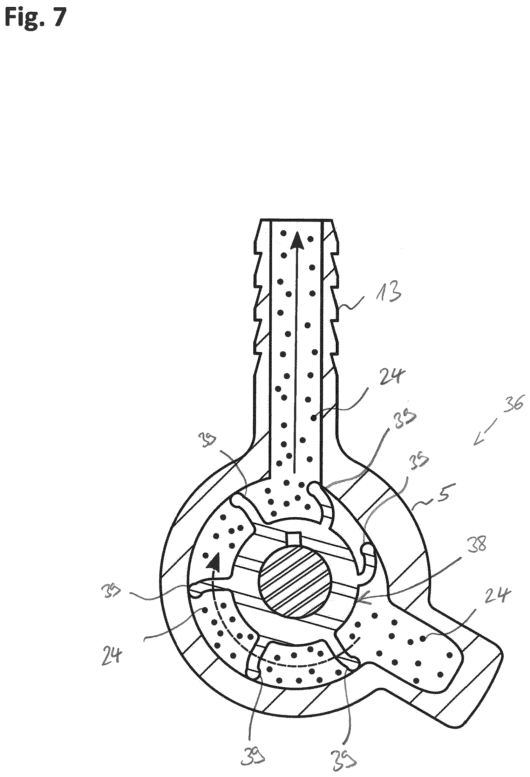

Fig. 7 shows a cross sectional view in the style of Fig. 6 through a further embodiment of a filtering device 1. The filtering device 36 comprises similar features having similar functions to filtering device 1. Similar features have been provided with the same reference numbers.

The filtering device 36 basically only distinguishes from filtering device 1 in the second impeller means 38 that comprises flexible vanes 39, such that the flexible vanes 39 sealingly press against the inner wall of the end cap 5, while the second impeller means 36 is stationary. The flexible vanes 39 are configured such that they can seal off the inlet chamber 7 from the sludge outlet 13 during the filtering mode. In an embodiment, the flexible vanes 39 are manufactured at least partially from a rubber-based material.

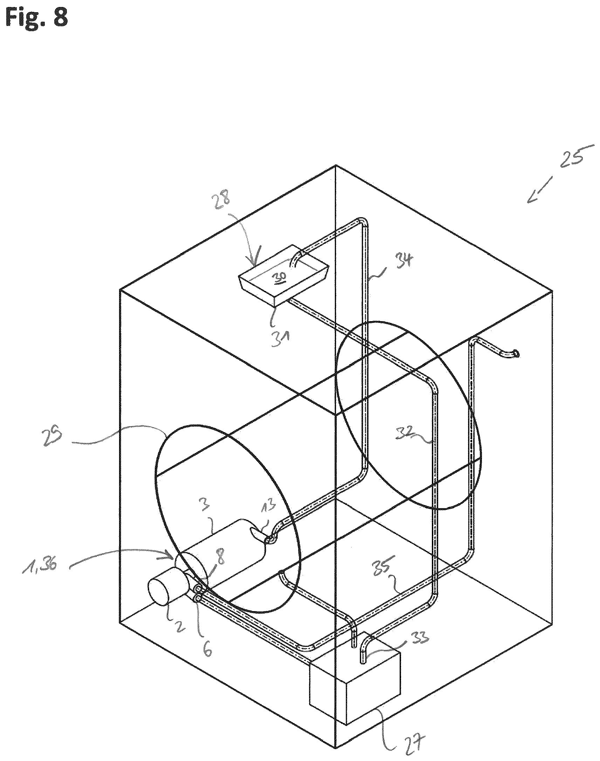

Fig. 8 schematically shows a machine 25 producing particle-contaminated liquid, here a textile washing machine, from the front and lateral side with the machine body casing 26 changed to transparent to allow a view into the interior of the machine 25.

The machine 25 comprises the filtering device 1 or alternatively the filtering device 36 according to the previously described embodiments.

Fig. 8 shall be interpreted as disclosing an advantageous and exemplary implementation of embodiments of filtering devices 1, 36 into a machine producing a flow of particle-contaminated liquid, in particular of a textile washing machine producing a flow of plastic-fiber contaminated water.

The filtering device 1, 36 including its driving motor unit 2 are installed in the interior of the machine 25, as is a machine drain pump 27, a particle-sludge collecting means 28 - here in the form of a compartment in the detergent drawer of the washing machine 25 - and a washing drum 29.

The machine 25 further comprises a detecting and control unit (not depicted) for detecting directly or indirectly a level of clogging of the filter screen unit 14 with particles. The detecting and control unit can for example comprise one pressure sensor at the inlet 6, a washing water level detector in the washing drum 29, or a water flow detector e.g. located at the outlet 8. The detecting and control unit is in communication with the motor unit 2 and can initiate a self-cleaning routine based on a detected level of clogging of the filter screen unit 14, or here of the filter screen sheet 16.

For example, if excessive clogging is detected, as the machine drain pump could be stopped, a self-cleaning of the filtering device 1, 36 initiated and then the drain pump 27 resumed. The procedure would, for example, take within the range from 2 to 10 seconds.

The washing drum 29 is in fluid connection with the inlet of the filtering device 1, 36 via the machine drain pump 27. The outlet of the filtering device 1, 36 is in fluid connection with a sewer pipe, and the sludge outlet of the filtering device 1, 36 is in fluid connection with the particle-sludge collecting compartment 28 in the drawer.

The particle-sludge collecting compartment 28 is connected to the sludge outlet via a sludge hose 34 and can comprise a strainer 30 on top of a collecting cup 31 that is connected by a hose 32 to the inlet 33 of the drain pump 27.

The strainer 30 is configured to capture the particles, or here plastic fibers, and to dewater the particle-sludge by gravity, such that the concentrated particles, here plastic fibers, can for example later be conveniently removed by a user from the drawer compartment 28. As can further be seen from Fig. 8, the outlet of the filtering device 1, 36 is fluidly connected by a drain hose 35 to a sewer pipe.

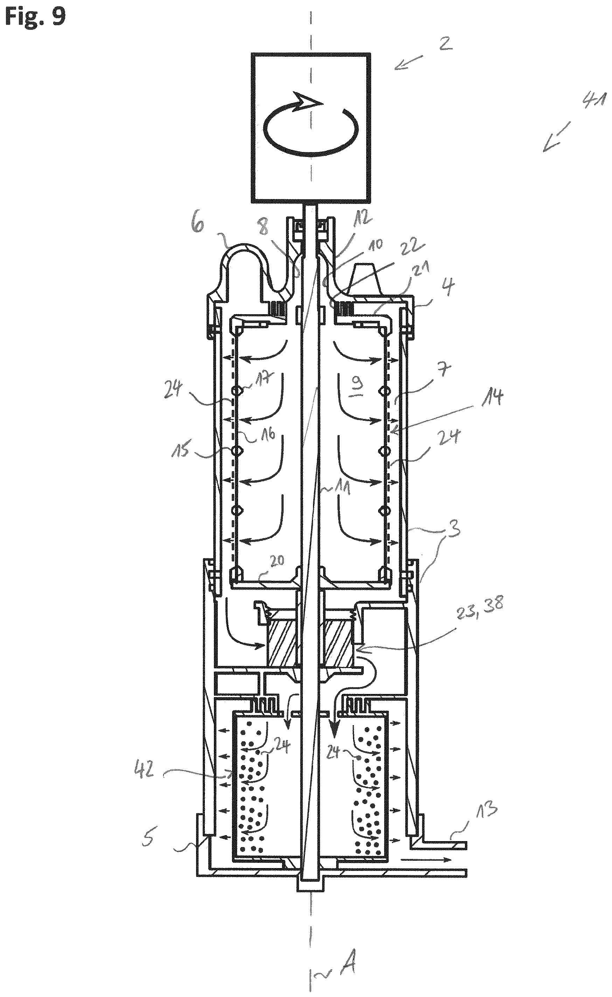

Fig. 9 shows a cross-sectional view through a filtering device 41 of another embodiment according to the present invention.

The filtering device 41 comprises similar features having similar functions to filtering devices 1 and 36. Similar features have been provided with the same reference numbers. The first impeller means 18 (that is, here the vanes 19) of the previous embodiments is also present in this embodiment although not illustrated in Fig. 9 for reasons of clarity.

The filtering device 41 basically only distinguishes from the filtering devices 1 and 36 in the lower half of the device that in this embodiment faces away from the motor unit 2.

The main body casing 3 in this embodiment comprises two parts, more specifically two fluid-tight connected hollow and cylindrical casings, wherein the end cap 5 with the sludge outlet 13 closes the lower open end of the main body casing 3 in a removable, but fluid tight manner.

The present filtering device 41 contains in its middle section a second impeller means according to the 'sealing-off'-second impeller means 38 as described in connection with filtering device 36 or, alternatively, the second impeller means 23 as described in connection with filtering device 1.

The lower half of the filtering device 41 comprises a detachable particle-sludge collecting means for capturing and dewatering particle-sludge coming from the filter screen unit 14 in the self-cleaning mode. In this embodiment, the detachable particle-sludge collecting means is embodied by a rotatable second filter screen unit 42 having a mesh and a hollow basket-like construction quite similar to the filter screen unit 14.

The filtering device 41 comprises the filter screen unit 14, the second impeller means 38 (or alternatively the means 23) and the detachable particle-sludge collecting means, here in the form of the second filter screen unit 42, along the axis of rotation A in the order as stated.

Fig. 9 shows the filtering device 41 in the self-cleaning mode. As illustrated by the arrows in this figure, in the self-cleaning mode, a suspension of liquid comprising particle-sludge detached from the filter screen unit 14 is actively transported via the second impeller means 38 (or 23) into the second filter screen unit 42, where particles are captured and the particle-sludge is dewatered, here by centrifugal forces coming from the rotation of the filter screen unit 42 in combination with the mesh of the second filter screen unit 42.

The second filter screen unit 42 is detachable from and re-attachable to the filtering device 41, for example via friction fit and the use of fitting seals. In this embodiment, this also applies for the end cap 5.

In the self-cleaning mode, the second filter screen unit 42 captures and dewaters the particle-sludge such that only filtered liquid exits the sludge outlet 13, which can for example be connected to a sewer pipe.

In some embodiments, the filtering device 41 is installed together with the motor unit 2 and the aforementioned detecting and control unit (not illustrated) within the machine body casing 26 of a machine producing contaminated liquid to be filtered, for example the textile washing machine 25. In such a case, the filtering device 41 would be installed in such a manner that the lower half containing the detachable particle-sludge collecting means, in the present embodiment the second filter screen unit 42, would still be accessible by a user from the outside of the machine 25, for example hidden behind a removable cover or door of the machine 25.

In other embodiments, the filtering device 41 can be attached to the outer periphery of a machine 25.

In the following, the functioning of the illustrated embodiments will be briefly explained.

When the filtering device 1, 36, 41 is in the filtering mode, particle-contaminated liquid coming e.g. from the washing machine 25 enters the inlet chamber 7 via the inlet 6 and flows through the filter screen sheet 16 radially inward into the outlet chamber 9, and from the outlet chamber 9 though the outlet 8 into the sewer system. The rotatable filter screen unit 14 is kept stationary by motor unit 2 and does not rotate. In the filtering mode, contaminant particles, here plastic fibers, are accumulated on the radial outer side of the filter screen sheet 16 and with time will start to increasingly reduce the possible volume flow of liquid through filter screen unit 14 and thus from inlet chamber 7 into outlet chamber 9. In case of filtering device 36, the flexible vanes 39 of the second impeller means 38 seal off the sludge outlet 13 from the inlet chamber 7 and thus prevents liquid to be filtered from exiting the filtering device through the sludge outlet 13 in an efficient way.

The detecting and control unit can monitor the state of clogging of the filter screen unit 14 by the accumulated particles, e.g. by a pressure sensor at the inlet 6, and in case the detected pressure exceeds a threshold value, will communicate to the motor unit 2 to initiate a self-cleaning mode routine in which the filter screen unit 14 as well as the first impeller means 18 and, if present, the second impeller means 23 or 38 are rotated, e.g. at 1000 rpm, for a certain time period, e.g. 7 seconds, to detach the particle-sludge 24 from the filter screen unit 14 by centrifugal force as well as by residual liquid flowing from the outlet chamber 9 radially outward through the filter screen sheet 16 into the inlet chamber 7.

In the case of filtering devices 1 and 36, particle-sludge 24 is actively transported in a suspension with water by the rotation of the first 18 and/or second impeller means 23 or 38 through the sludge outlet 13 to the sludge-collecting means 28, here located in the front drawer of the machine 25, where it is captured and dewatered and the end user/customer can easily access the concentrated particles, here plastic fibers, for an environment-friendly disposal with little effort.

In the case of filtering device 41, the particle-sludge 24 is actively transported in a suspension with water by the first 18 and/or second impeller means 23 or 28 to the second filter screen unit 42, where it is captured and dewatered by centrifugal forces applied through the rotating of the second filter screen unit 42 together with shaft 11. The user can then, preferably after several self-cleaning cycles have passed, detach the end cap 5 from the device 41, clean or replace the second filter screen unit 42 and reattach everything into place for making the filtering device ready for continues use.

## Claims

1. A filtering device (1, 36, 41) configured to be operated in a filtering mode in which particles, in particular plastic particles, are filtered from a liquid flowing through the filtering device (1, 36, 41), the filtering device (1, 36, 41) comprising
an inlet chamber (7) receiving unfiltered liquid in the filtering mode,
an outlet chamber (9) receiving filtered liquid from the inlet chamber (7) in the filtering mode, and
a filter screen unit (14) separating the inlet chamber (7) from the outlet chamber (9) and being configured to filter particles from liquid flowing from the inlet chamber (7) into the outlet chamber (9),
wherein the filter screen unit (14) is rotatable about an axis of rotation (A),
wherein at least a part of the inlet chamber (7) is located radially outward of the rotatable filter screen unit (14) with respect to the axis of rotation (A), and
wherein the filtering device (1, 36, 41) is configured to be operated in a self-cleaning mode in which the filter screen unit (14) is rotated to detach filtered particle-sludge (24) from the filter screen unit (14), **characterized in that**
the filtering device (1, 36, 41) further comprises a second impeller means (23, 38) configured to remove a suspension comprising particle-sludge (24) from the inlet chamber (7) in the self-cleaning mode, wherein the second impeller means (23, 38) is at least partly located in the inlet chamber (7).

2. A filtering device (1, 36, 41) according to claim 1, wherein the filtering device (1, 36, 41) is configured to hold the filter screen unit (14) stationary in the filtering mode.

3. A filtering device (1, 36, 41) according to one of the preceding claims, further comprising a first impeller means (18) configured to move liquid from the outlet chamber (9) through the filter screen unit (14) to the inlet chamber (7), in the self-cleaning mode, and/or wherein the first impeller means (18) is located within the filter screen unit (14).

4. A filtering device (1, 36, 41) according to one of the preceding claims, wherein a rotation of the second impeller means (23, 38) is coupled to a rotation of the filter screen unit (14), and/or, when dependent on claim 3, a rotation of the second impeller means (23, 38) is coupled to a rotation of the first impeller means (18).

5. A filtering device (1, 36, 41) according to claim 3 or 4, wherein the filter screen unit (14) and the first impeller means (18) are driven by a common drive shaft (11) extending along the axis of rotation (A), preferably, wherein the second impeller means (23, 38) is driven by the drive shaft (11).

6. A filtering device (1, 36) according to one of the preceding claims, wherein the axis of rotation (A) runs through a part of the outlet passageway (10) of the outlet chamber (9) and/or, when dependent on claim 5, the drive shaft (11) runs through a part of the outlet passageway (10) of the outlet chamber (9).

7. A filtering device (1, 36, 41) according to one of the preceding claims, wherein
the filter screen unit (14) comprises a hollow cage-like structure,
the outlet chamber (9) is located within the filter screen unit (14), and
the filter screen unit (14) is surrounded by the inlet chamber (7).

8. A filtering device (1, 36, 41) according to one of the preceding claims, wherein the inlet chamber (7) comprises a separate sludge outlet (13) allowing particle-sludge (24) to exit the filtering device (1, 36) in the self-cleaning mode, and/or wherein the second impeller means (38) seals off the sludge outlet (13) from the inlet chamber (7) in the filtering mode.

9. A filtering device (41) according to one of the preceding claims, comprising a detachable particle-sludge collecting means (42) for capturing and dewatering particle-sludge detached from the filter screen unit (14) in the self-cleaning mode, preferably wherein the particle-sludge collecting means is provided in the form of a second filter screen unit (41) rotatable around the axis of rotation (A), in particular the second filter screen unit (41) is driven by the common drive shaft (11) in the self-cleaning mode when dependent on claim 5.

10. A filtering device (1, 36, 41) according to one of the preceding claims, wherein the inlet (6) of the inlet chamber (7) and the outlet (8) of the outlet chamber (9) are both located on the same axial face side of the filtering device (1), in particular the inlet (6) and outlet (8) are located at an opposing axial face side of the filtering device (1) with respect to the sludge outlet (13) when dependent on claim 8.

11. A filtering system comprising
a filtering device (1, 36, 41) according to one of the preceding claims,
a detecting and control unit for detecting directly or indirectly a level of clogging of the filter screen unit (14), and
a motor unit (2) drivingly coupled with the filter screen unit (14) for rotating the filter screen unit (14) and connected to the detecting and control unit, wherein the detecting and control unit is configured to execute the self-cleaning mode dependent on a detected level of clogging.

12. A machine (25) producing a flow of particle-contaminated liquid, in particular a textile washing machine (25), comprising a filtering device (1, 36, 41) according to one of the preceding claims or a filtering system according to claim 11, in particular comprising said filtering device (1, 36, 41) or said filtering system installed within the machine body casing (26), and preferably the machine further comprising
a particle-sludge collecting means (28, 42) for capturing and dewatering detached particle-sludge, in particular accessible from outside of the machine (25), more particularly implemented in an accessible opening of the machine, such as in a drawer of the machine (25), wherein the filtering device (1, 36) is connected to the particle-sludge collecting means (28) such that filtered particle-sludge (24) can be transported into the particle-sludge collecting means (28).

13. A method of operating a filtering device (1, 36, 41) filtering particles, in particular filtering plastic particles, from a flow of liquid, the method comprising the steps of
directing, in a filtering mode, a flow of liquid from the exterior of a rotatable filter screen unit (14) through the rotatable filter screen unit (14) to the interior of the filter screen unit (14) and thereby accumulating filtered particle-sludge (24) on the radial outer side of the filter screen unit (14), the rotatable filter screen unit (14) separating an inlet chamber (7) from an outlet chamber (9) of the filtering device (1, 36, 41), and the method further comprising the steps of
rotating the filter screen unit (14) to detach filtered particle-sludge (24) from the filter screen unit (14) in a self-cleaning mode and removing a suspension comprising particle-sludge (24) from the inlet chamber (7) by a second impeller means (23, 38) at least partly located in the inlet chamber (7).

14. A method according to claim 13, wherein the method further comprises actively transporting liquid from the interior of the filter screen unit (14) through the filter screen unit (14) to the exterior of the filter screen unit (14), in the self-cleaning mode.

15. A method according to claim 13 or 14, comprising actively transporting in the self-cleaning mode a suspension comprising detached particle-sludge (24) to a particle-sludge collecting means (28, 42) for capturing and dewatering the particle-sludge, in particular to a particle-sludge collecting means (42) detachable from the filtering device or to a particle-sludge collecting means (28) external to the filtering device such as to a compartment of a textile washing machine.

16. A method according to one of claims 13 to 15, wherein the method is carried out with a filtering device (1, 36, 41) according to one of claims 1 to 10, or is carried out with a filtering system according to claim 11, or is carried out with a machine (25) according to claim 12.

## Patentansprüche

1. Filtervorrichtung (1, 36, 41), die so ausgeführt ist, dass sie in einem Filtermodus betrieben wird, in dem Partikel, insbesondere Kunststoffpartikel, aus einer durch die Filtervorrichtung (1, 36, 41) strömende Flüssigkeit gefiltert werden, wobei die Filtervorrichtung (1, 36, 41) umfasst:
eine Einlasskammer (7), die in dem Filtermodus ungefilterte Flüssigkeit aufnimmt,
eine Auslasskammer (9), die in dem Filtermodus gefilterte Flüssigkeit aus der Einlasskammer (7) aufnimmt, und
eine Filtersiebeinheit (14), die die Einlasskammer (7) von der Auslasskammer (9) trennt und so ausgeführt ist, dass sie Partikel aus Flüssigkeit herausfiltert, die aus der Einlasskammer (7) heraus in die Auslasskammer (9) einströmt,
wobei die Filtersiebeinheit (14) um eine Drehachse (A) herum gedreht werden kann,
wobei wenigstens ein Teil der Einlasskammer (7) in Bezug auf die Drehachse (A) radial außerhalb der drehbaren Filtersiebeinheit (14) liegt, und
wobei die Filtervorrichtung (1, 36, 41) so ausgeführt ist, dass sie in einem Selbstreinigungsmodus betrieben wird, in dem die Filtersiebeinheit (14) gedreht wird, um gefilterten Partikelschlamm (24) von der Filtersiebeinheit (14) zu lösen;
**dadurch gekennzeichnet, dass**
die Filtervorrichtung (1, 36, 41) des Weiteren eine zweite Laufradeinrichtung (23, 38) umfasst, die so ausgeführt ist, dass sie in dem Selbstreinigungsmodus eine Suspension, die Partikelschlamm (24) umfasst, aus der Einlasskammer (7) entfernt, wobei sich die zweite Laufradeinrichtung (23, 38) wenigstens teilweise in der Einlasskammer (7) befindet.

2. Filtervorrichtung (1, 36, 41) nach Anspruch 1, wobei die Filtervorrichtung (1, 36, 41) so ausgeführt ist, dass sie die Filtersiebeinheit (14) in dem Filtermodus stationär hält.

3. Filtervorrichtung (1, 36, 41) nach einem der vorangehenden Ansprüche, die des Weiteren eine erste Laufradeinrichtung (18) umfasst, die so ausgeführt ist, dass sie in dem Selbstreinigungsmodus Flüssigkeit von der Auslasskammer (9) durch die Filtersiebeinheit (14) zu der Einlasskammer (7) transportiert, und/oder wobei die erste Laufradeinrichtung (18) sich im Inneren der Filtersiebeinheit (14) befindet.

4. Filtervorrichtung (1, 36, 41) nach einem der vorangehenden Ansprüche, wobei eine Drehung der zweiten Laufradeinrichtung (23, 38) mit einer Drehung der Filtersiebeinheit (14) gekoppelt ist, und/oder, wenn abhängig von Anspruch 3, eine Drehung der zweiten Laufradeinrichtung (23, 38) mit einer Drehung der ersten Laufradeinrichtung (18) gekoppelt ist.

5. Filtervorrichtung (1, 36, 41) nach Anspruch 3 oder 4, wobei die Filtersiebeinheit (14) und die erste Laufradeinrichtung (18) von einer gemeinsamen Antriebswelle (11) angetrieben werden, die sich entlang der Drehachse (A) erstreckt, wobei vorzugsweise die zweite Laufradeinrichtung (23, 38) von der Antriebswelle (11) angetrieben wird.

6. Filtervorrichtung (1, 36,) nach einem der vorangehenden Ansprüche, wobei die Drehachse (A) durch einen Teil des Auslasskanals (10) der Auslasskammer (9) hindurch verläuft und/oder, wenn abhängig von Anspruch 5, die Antriebswelle (11) durch einen Teil des Auslasskanals (10) der Auslasskammer (9) hindurch verläuft.

7. Filtervorrichtung (1, 36, 41) nach einem der vorangehenden Ansprüche, wobei
die Filtersiebeinheit (14) eine hohle käfigartige Struktur umfasst,
die Auslasskammer (9) sich im Inneren der Filtersiebeinheit (14) befindet und
die Filtersiebeinheit (14) von der Einlasskammer (17) umschlossen ist.

8. Filtervorrichtung (1, 36, 41) nach einem der vorangehenden Ansprüche, wobei die Einlasskammer (7) einen separaten Schlamm-Auslass (13) umfasst, der zulässt, dass in dem Selbstreinigungsmodus Partikelschlamm (24) aus der Filtervorrichtung (1, 36) Austritt, und/oder wobei die zweite Laufradeinrichtung (38) in dem Filtermodus den Schlamm-Auslass (13) gegenüber der Einlasskammer (7) abdichtet.

9. Filtervorrichtung (41) nach einem der vorangehenden Ansprüche, die eine entnehmbare Partikelschlamm-Sammeleinrichtung (42) zum Auffangen und Entwässern von in dem Selbstreinigungsmodus aus der Filtersiebeinheit (14) gelöstem Partikelschlamm umfasst, wobei vorzugsweise die Partikelschlamm-Auffangeinrichtung in Form einer zweiten Filtersiebeinheit (41) bereitgestellt wird, die um die Drehachse (A) herum gedreht werden kann, und insbesondere, wenn abhängig von Anspruch 5, die zweite Filtersiebeinheit (41) von der gemeinsamen Antriebswelle (11) angetrieben wird.

10. Filtervorrichtung (1, 36, 41) nach einem der vorangehenden Ansprüche, wobei der Einlass (6) der Einlasskammer (7) und der Auslass (8) der Auslasskammer (9) sich beide an der gleichen axialen Stirnseite der Filtervorrichtung (1) befinden und insbesondere, wenn abhängig von Anspruch 8, der Einlass (6) und der Auslass (8) sich an einer in Bezug auf den Schlamm-Auslass (13) gegenüberliegenden axialen Stirnseite der Filtervorrichtung (1) befinden.

11. Filtersystem, das umfasst
eine Filtervorrichtung (1, 36, 41) nach einem der vorangehenden Ansprüche,
eine Erfassungs-und-Steuerungs-Einheit zum direkten oder indirekten Erfassen eines Grades an Verstopfung der Filtersiebeinheit (14), sowie
eine Motoreinheit (2), die antreibend mit der Filtersiebeinheit (14) gekoppelt ist, um die Filtersiebeinheit (14) zu drehen, und mit der Erfassungs-und-Steuerungs-Einheit verbunden ist, wobei die Erfassungs-und-Steuerungs-Einheit so ausgeführt ist, dass sie den Selbstreinigungsmodus in Abhängigkeit von einem erfassten Grad an Verstopfung ausführt.

12. Maschine (25), die einen Strom mit Teilchen verunreinigter Flüssigkeit erzeugt, insbesondere eine Textilwaschmaschine (25), die eine Filtervorrichtung (1, 36, 41) nach einem der vorangehenden Ansprüche oder ein Filtersystem nach Anspruch 11 umfasst, insbesondere die Filtervorrichtung (1, 36, 41) oder das Filtersystem umfasst, die/das im Inneren des Maschinengehäuses (26) installiert ist, und wobei vorzugsweise die Maschine des Weiteren umfasst:
eine Partikelschlamm-Sammeleinrichtung (28, 42) zum Auffangen und Entwässern von gelöstem Partikelschlamm, die insbesondere von außerhalb der Maschine (25) zugänglich ist, und besonders bevorzugt in einer zugänglichen Öffnung der Maschine, wie etwa in einer Schublade der Maschine (25), implementiert ist, wobei die Filtervorrichtung (1, 36) mit der Partikelschlamm-Sammeleinrichtung (28) so verbunden ist, dass gefilterter Partikelschlamm (24) in die Partikelschlamm-Sammeleinrichtung (28) transportiert werden kann.

13. Verfahren zum Betreiben einer Filtervorrichtung (1, 36, 41), die Partikel, insbesondere Kunststoffpartikel aus einem Strom von Flüssigkeit filtert, wobei das Verfahren die folgenden Schritte umfasst:
Leiten eines Stroms von Flüssigkeit in einem Filtermodus von der Außenseite einer drehbaren Filtersiebeinheit (14) durch die drehbare Filtersiebeinheit (14) hindurch in den Innenraum der Filtersiebeinheit (14) hinein und damit Ansammeln von gefiltertem Partikelschlamm (24) an der radialen Außenseite der Filtersiebeinheit (14), wobei die drehbare Filtersiebeinheit (14) eine Einlasskammer (7) von einer Auslasskammer (9) der Filtervorrichtung (1, 36, 41) trennt und das Verfahren des Weiteren die folgenden Schritte umfasst:
Drehen der Filtersiebeinheit (14) zum Lösen von gefiltertem Partikelschlamm (24) von der Filtersiebeinheit (14) in einem Selbstreinigungsmodus und Entfernen einer Suspension, die Partikelschlamm (24) umfasst, aus der Einlasskammer (7) durch eine zweite Laufradeinrichtung (23, 38), die sich wenigstens teilweise in der Einlasskammer (7) befindet.

14. Verfahren nach Anspruch 13, wobei das Verfahren des Weiteren in dem Selbstreinigungsmodus aktives Transportieren von Flüssigkeit aus dem Innenraum der Filtersiebeinheit (14) durch die Filtersiebeinheit (14) hindurch zu der Außenseite der Filtersiebeinheit (14) umfasst.

15. Verfahren nach Anspruch 13 oder 14, das in dem Selbstreinigungsmodus aktives Transportieren einer gelösten Partikelschlamm (24) umfassenden Suspension zu einer Partikelschlamm-Sammeleinrichtung (28, 42) zum Auffangen und Entwässern des Partikelschlamms, insbesondere zu einer Partikelschlamm-Sammeleinrichtung (42), die von der Filtervorrichtung gelöst werden kann, oder zu einer Partikelschlamm-Sammeleinrichtung (28) außerhalb der Filtervorrichtung, so beispielsweise einer Kammer einer Textilwaschmaschine, umfasst.

16. Verfahren nach einem der Ansprüche 13 bis 15, wobei das Verfahren mit einer Filtervorrichtung (1, 36, 41) nach einem der Ansprüche 1 bis 10 ausgeführt wird oder mit einem Filtersystem nach Anspruch 11 ausgeführt wird oder mit einer Maschine (25) nach Anspruch 12 ausgeführt wird.

## Revendications

1. Dispositif de filtration (1, 36, 41) configuré pour fonctionner en mode de filtration dans lequel des particules, en particulier des particules de plastique, sont filtrées depuis un liquide s'écoulant à travers le dispositif de filtration (1, 36, 41), le dispositif de filtration (1, 36, 41) comprenant
une chambre d'entrée (7) recevant le liquide non filtré en mode de filtration,
une chambre de sortie (9) recevant le liquide filtré provenant de la chambre d'entrée (7) en mode de filtration, et
une unité de tamis filtrant (14) séparant la chambre d'entrée (7) de la chambre de sortie (9) et étant configurée pour filtrer les particules depuis le liquide s'écoulant de la chambre d'entrée (7) vers la chambre de sortie (9),
dans lequel l'unité de tamis filtrant (14) peut tourner autour d'un axe de rotation (A),
dans lequel au moins une partie de la chambre d'entrée (7) est située radialement à l'extérieur de l'unité de tamis filtrant rotative (14) par rapport à l'axe de rotation (A), et
dans lequel le dispositif de filtration (1, 36, 41) est configuré pour fonctionner en mode d'autonettoyage, dans lequel l'unité de tamis filtrant (14) est mise en rotation pour détacher les boues de particules filtrées (24) de l'unité de tamis filtrant (14), **caractérisé en ce que**
le dispositif de filtration (1, 36, 41) comprend en outre un second moyen à pâles (23, 38) configuré pour retirer une suspension comprenant les boues de particules (24) de la chambre d'entrée (7) en mode d'autonettoyage, dans lequel le second moyen à pâles (23, 38) est au moins partiellement situé dans la chambre d'entrée (7).

2. Dispositif de filtration (1, 36, 41) selon la revendication 1, dans lequel le dispositif de filtration (1, 36, 41) est configuré pour maintenir l'unité de tamis filtrant (14) immobile en mode de filtration.

3. Dispositif de filtration (1, 36, 41) selon l'une des revendications précédentes, comprenant en outre un premier moyen à pâles (18) configuré pour déplacer le liquide de la chambre de sortie (9) à travers l'unité de tamis filtrant (14) vers la chambre d'entrée (7), en mode d'autonettoyage, et/ou dans lequel le premier moyen à pâles (18) est situé à l'intérieur de l'unité de tamis filtrant (14).

4. Dispositif de filtration (1, 36, 41) selon l'une des revendications précédentes, dans lequel la rotation du second moyen à pâles (23, 38) est couplée à la rotation de l'unité de tamis filtrant (14), et/ou, lorsqu'elle dépend de la revendication 3, la rotation du second moyen à pâles (23, 38) est couplée à la rotation du premier moyen à pâles (18).

5. Dispositif de filtration (1, 36, 41) selon la revendication 3 ou 4, dans lequel l'unité de tamis filtrant (14) et le premier moyen à pâles (18) sont entraînés par un arbre d'entraînement commun (11) s'étendant le long de l'axe de rotation (A), de préférence, dans lequel le second moyen à pâles (23, 38) est entraîné par l'arbre d'entraînement (11).

6. Dispositif de filtration (1, 36) selon l'une des revendications précédentes, dans lequel l'axe de rotation (A) traverse une partie du passage de sortie (10) de la chambre de sortie (9) et/ou, lorsqu'elle dépend de la revendication 5, l'arbre d'entraînement (11) traverse une partie du passage de sortie (10) de la chambre de sortie (9).

7. Dispositif de filtration (1, 36, 41) selon l'une des revendications précédentes, dans lequel
l'unité de tamis filtrant (14) comprend une structure creuse en forme de cage,
la chambre de sortie (9) est située à l'intérieur de l'unité de tamis filtrant (14), et
l'unité de tamis filtrant (14) est entourée par la chambre d'entrée (7).

8. Dispositif de filtration (1, 36, 41) selon l'une des revendications précédentes, dans lequel la chambre d'entrée (7) comprend une sortie de boues séparée (13) permettant aux boues de particules (24) de sortir du dispositif de filtration (1, 36) en mode d'autonettoyage, et/ou dans lequel le second moyen à pâles (38) isole la sortie de boues (13) de la chambre d'entrée (7) en mode de filtration.

9. Dispositif de filtration (41) selon l'une des revendications précédentes, comprenant un moyen de collecte de boues de particules détachables (42) destiné à capturer et à déshydrater les boues de particules détachées de l'unité de tamis filtrant (14) en mode d'autonettoyage, de préférence dans lequel le moyen de collecte de boues de particules est prévu sous la forme d'une seconde unité de tamis filtrant (41) pouvant tourner autour de l'axe de rotation (A), en particulier la seconde unité de tamis filtrant (41) est entraînée par l'arbre d'entraînement commun (11) en mode d'autonettoyage lorsqu'elle dépend de la revendication 5.

10. Dispositif de filtration (1, 36, 41) selon l'une des revendications précédentes, dans lequel l'entrée (6) de la chambre d'entrée (7) et la sortie (8) de la chambre de sortie (9) sont toutes deux situées du même côté de face axial du dispositif de filtration (1), en particulier l'entrée (6) et la sortie (8) sont situées sur un côté de face axial opposé du dispositif de filtration (1) par rapport à la sortie de boues (13) lorsqu'elle dépend de la revendication 8.

11. Système de filtration comprenant :
un dispositif de filtration (1, 36, 41) selon l'une des revendications précédentes,
une unité de détection et de commande pour détecter directement ou indirectement le niveau d'encrassement de l'unité de tamis filtrant (14), et
une unité moteur (2) couplée en entraînement à l'unité de tamis filtrant (14) pour faire tourner l'unité de tamis filtrant (14) et reliée à l'unité de détection et de commande, dans lequel l'unité de détection et de commande est configurée pour exécuter le mode d'autonettoyage en fonction du niveau d'encrassement détecté.

12. Machine (25) produisant un flux de liquide contaminé par des particules, en particulier une machine à laver (25), comprenant un dispositif de filtration (1, 36, 41) selon l'une des revendications précédentes ou un système de filtration selon la revendication 11, en particulier comprenant ledit dispositif de filtration (1, 36, 41) ou ledit système de filtration installé à l'intérieur du boîtier de corps de machine (26), et de préférence la machine comprenant en outre
un moyen de collecte de boues de particules (28, 42) destiné à capturer et à déshydrater des boues de particules détachées, en particulier accessible de l'extérieur de la machine (25), plus particulièrement mis en œuvre dans une ouverture accessible de la machine, telle qu'un tiroir de la machine (25), dans laquelle le dispositif de filtration (1, 36) est relié au moyen de collecte de boues de particules (28) de sorte que les boues de particules filtrées (24) puissent être transportées dans le moyen de collecte de boues de particules (28).

13. Procédé de fonctionnement d'un dispositif de filtration (1, 36, 41) filtrant des particules, en particulier filtrant des particules de plastique, depuis un flux de liquide, le procédé comprenant les étapes consistant à
diriger, en mode de filtration, un flux de liquide depuis l'extérieur d'une unité de tamis filtrant rotative (14) à travers l'unité de tamis filtrant rotative (14) vers l'intérieur de l'unité de tamis filtrant (14), et accumuler ainsi des boues de particules filtrées (24) sur le côté extérieur radial de l'unité de tamis filtrant (14), l'unité de tamis filtrant rotative (14) séparant une chambre d'entrée (7) d'une chambre de sortie (9) du dispositif de filtration (1, 36, 41), et le procédé comprenant en outre les étapes consistant à
faire tourner l'unité de tamis filtrant (14) pour détacher les boues de particules filtrées (24) de l'unité de tamis filtrant (14) en mode d'autonettoyage et retirer la suspension comprenant les boues de particules (24) de la chambre d'entrée (7) par un second moyen à pâles (23, 38) au moins partiellement situé dans la chambre d'entrée (7).

14. Procédé selon la revendication 13, dans lequel le procédé comprend en outre le transport actif de liquide de l'intérieur de l'unité de tamis filtrant (14) à travers l'unité de tamis filtrant (14) vers l'extérieur de l'unité de tamis filtrant (14), en mode d'autonettoyage.

15. Procédé selon la revendication 13 ou 14, comprenant le transport actif, en mode d'autonettoyage, d'une suspension comprenant des boues de particules détachées (24) vers un moyen de collecte de boues de particules (28, 42) destiné à capturer et à déshydrater les boues de particules, notamment vers un moyen de collecte de boues de particules (42) détachable du dispositif de filtration ou vers un moyen de collecte de boues de particules (28) externe au dispositif de filtration, tel qu'un compartiment d'une machine à laver.

16. Procédé selon l'une des revendications 13 à 15, dans lequel le procédé est mis en œuvre avec un dispositif de filtration (1, 36, 41) selon l'une des revendications 1 à 10, ou est mis en œuvre avec un système de filtration selon la revendication 11, ou est mis en œuvre avec une machine (25) selon la revendication 12.
